# EUROPEAN PATENT APPLICATION

(11) **EP 4 521 851 A1**
(43) Date of publication of application: **12.03.2025**
(21) Application number: 24199395.5
(22) Date of filing: 10.09.2024
(51) Int. Cl.: H04W 84/12, H04W 88/08

(54) **SYSTEMS FOR AND METHODS FOR RANGE EXTENSION IN WIRELESS DEVICES**

(30) Priority: 11.09.2023 IN 202321060868; 31.01.2024 US 202418428871
(71) Applicant: Avago Technologies International Sales Pte. Limited, Singapore 768923 (SG)
(72) Inventor: Verma, Sindhu, Irvine, 92618 (US); Adhikari, Shubhodeep, Irvine, 92618 (US); Gummadi, Srikanth, Irvine, 92618 (US); Bhukania, Bijoy, Irvine, 92618 (US); Fischer, Matthew, Irvine, 92618 (US); Erceg, Vinko, Irvine, 92618 (US)
(74) Representative: Bosch Jehle Patentanwaltsgesellschaft mbH

(57) **Abstract**

The solutions can include devices, systems and methods for facilitating wireless communication of narrowband devices within a communication range of wideband access points. An access point (AP) can be configured to communicate with one or more stations using a wideband preamble and to communicate with a first one or more devices via narrowband channels. The AP can establish a service period (SP) with the one or more stations for which the one or more stations and the AP pause communications over the wideband channels. The AP can receive, during the SP, one or more protocol data units from the first one or more devices over the one or more narrowband channels without the wideband preamble. The AP can forward, during the SP, data from the one or more protocol data units to a second one or more devices over the one or more narrowband channels.

## Description

This application claims the benefit of and priority to Indian Provisional Patent Application No. 202321060868, filed September 11, 2023, incorporated herein by reference in its entirety.

This disclosure generally relates to systems and methods for facilitating wireless network communication between devices, including without limitation improving the range of the wireless communication devices.

Wireless communications devices can be used for various types of data transfer in a variety of networks. Wireless communication can operate in accordance with various standards, such as the IEEE 802.11x (e.g., Wi-Fi technology), Bluetooth, global system for mobile communications (GSM), code division multiple access (CDMA) or Narrowband for Internet of Things (NB-IoT). Using such technologies, wireless communication devices can connect to local area networks and the internet without physical cables, communicating over radio frequencies and across various spaces and ranges. However, implementing or coordinating communication among different types of wireless devices can be challenging.

Technical solutions of this disclosure facilitate improved range and reduced interference to low-power narrowband wireless communications devices (e.g., IoT devices) communicating within the range of wideband access point (AP) devices, such as IEEE 802.11 Wireless Fidelity or Wi-Fi devices. These technical solutions can provide a reliable and extended range for narrowband low transmission power IoT wireless communication devices while avoiding communication collisions and increased compatibility with wideband legacy AP devices and their corresponding stations. The technical solutions can utilize features of the IEEE 802.11 wireless standard, such as usage of restricted target wake time service periods (rTWT SPs) to schedule communication intervals (e.g., quiet periods) to listen for transmissions, clear to send to self (CTS2SELF) features to reduce collisions, and trigger frames to initiate specific actions between devices. The technical solutions allow for the use of edge bandwidths outside of the standard 802.11 channels to facilitate reliable narrowband IoT communications. Range extension can be provided using mesh/repeater or client relay techniques, in which devices (e.g., client stations or APs) can facilitate in forwarding of messages between different range-limited devices. The solution can use various features of the IEEE P802.11be^{™}/D3.1 standard, which is incorporated herein in its entirety.

Some aspects of the technical solutions described herein relate to a system. The system can include an access point (AP) configured to communicate with one or more stations using a wideband preamble on one or more wideband channels and to communicate with a first one or more devices using one or more narrowband channels. The AP can be configured to establish a service period (SP) with the one or more stations for which the one or more stations and the AP pause communications over the one or more wideband channels. The AP can be configured to receive, during the SP, one or more protocol data units from the first one or more devices over the one or more narrowband channels without the wideband preamble. The AP can be configured to forward, during the SP, data from the one or more protocol data units to a second one or more devices over the one or more narrowband channels.

The system can include the AP that is further configured to establish the SP by communicating a target wakeup time (TWT) parameter corresponding to the SP to each of the one or more stations. The AP can be configured to transmit a clear to send to self (CTS2SELF) frame to at least a station of the one or more stations prior to a start of the SP. The CTS2SELF frame can be configured to cause the at least the station to refrain from sending transmissions during the SP.

The AP can be configured to transmit, over the one or more narrowband channels, a trigger frame to at least one of the first one or more devices or the second one or more devices prior to a start of the SP, the trigger frame configured to indicate to the at least one of the first one or more devices or the second one or more devices to prepare for at least one of a transmission or a receipt of the one or more protocol data units.

The AP and the one or more stations can communicate via the one or more wideband channels before and after the SP. The first one or more devices can include an internet of things (IoT) device. The one or more narrowband channels can comprise a bandwidth of up to 1MHz. The one or more protocol data units can comprise a narrowband preamble. The narrowband preamble can be a self-decodable narrowband preamble. The AP can be further configured to exchange narrowband control information and data with the first one or more devices during the SP.

Some aspects of the technical solutions described herein relate to a method. The method can include configuring, by one or more processors of an access point (AP), the AP to communicate with one or more stations using a wideband preamble on one or more wideband channels and to communicate with a first one or more devices using one or more narrowband channels. The method can include establishing, by the one or more processors, a service period (SP) with the one or more stations for which the one or more stations and the AP pause communications over the one or more wideband channels. The method can include receiving, by the one or more processors during the SP, one or more protocol data units from the first one or more devices over the one or more narrowband channels without the wideband preamble. The method can include forwarding, by the one or more processors during the SP, data from the one or more protocol data units to a second one or more devices over the one or more narrowband channels.

The method can include configuring, by the one or more processors, the AP to establish the SP by communicating a target wakeup time (TWT) parameter corresponding to the SP to each of the one or more stations. The method can include transmitting, by the one or more processors, a clear to send to self (CTS2SELF) frame to at least a station of the one or more stations prior to a start of the SP, the CTS2SELF frame configured to cause the at least the station to refrain from sending transmissions during the SP.

The method can include transmitting, by the one or more processors, over the one or more narrowband channels, a trigger frame to at least one of the first one or more devices or the second one or more devices prior to a start of the SP. The trigger frame can be configured to indicate to the at least one of the first one or more devices or the second one or more devices to prepare for at least one of a transmission or a receipt of the one or more protocol data units.

The AP and the one or more stations can communicate via the one or more wideband channels before and after the SP. The first one or more devices can include an internet of things (IoT) device. The one or more narrowband channels can include a bandwidth of up to 1MHz. The one or more protocol data units can include a narrowband preamble. The narrowband preamble can be a self-decodable narrowband preamble. The AP can be further configured to exchange narrowband control information and data with the first one or more devices during the SP.

Some aspects of the technical solutions described herein relate to a non-transitory computer-readable medium storing instructions. The instructions, when executed by at least one processor, can cause the at least one processor to establish, for an access point (AP) configured to communicate with one or more stations using a wideband preamble on one or more wideband channels and to communicate with a first one or more devices using one or more narrowband channels, a service period (SP) with the one or more stations for which the one or more stations and the AP pause communications over the one or more wideband channels. The instructions, when executed by at least one processor, can cause the at least one processor to receive, during the SP, one or more protocol data units from the first one or more devices over the one or more narrowband channels without the wideband preamble. The instructions, when executed by at least one processor, can cause the at least one processor to forward, during the SP, data from the one or more protocol data units to a second one or more devices over the one or more narrowband channels.

According to an aspect, a system is provided comprising:
an access point (AP) configured to communicate with one or more stations using a wideband preamble on one or more wideband channels and to communicate with a first one or more devices using one or more narrowband channels;
wherein the AP is configured to:
   establish a service period (SP) with the one or more stations for which the one or more stations and the AP pause communications over the one or more wideband channels;
   receive, during the SP, one or more protocol data units from the first one or more devices over the one or more narrowband channels without the wideband preamble; and
   forward, during the SP, data from the one or more protocol data units to a second one or more devices over the one or more narrowband channels.

Advantageously, the AP is further configured to establish the SP by communicating a target wakeup time (TWT) parameter corresponding to the SP to each of the one or more stations.

Advantageously, the AP is further configured to:
transmit a clear to send to self (CTS2SELF) frame to at least a station of the one or more stations prior to a start of the SP, the CTS2SELF frame configured to cause the at least the station to refrain from sending transmissions during the SP.

Advantageously, the AP is further configured to:
transmit, over the one or more narrowband channels, a trigger frame to at least one of the first one or more devices or the second one or more devices prior to a start of the SP, the trigger frame configured to indicate to the at least one of the first one or more devices or the second one or more devices to prepare for at least one of a transmission or a receipt of the one or more protocol data units.

Advantageously, the AP and the one or more stations are further configured to communicate via the one or more wideband channels before and after the SP.

Advantageously, the first one or more devices include an internet of things (IoT) device.

Advantageously, the one or more narrowband channels comprise a bandwidth of up to 1MHz.

Advantageously, the one or more protocol data units comprise a narrowband preamble.

Advantageously, the narrowband preamble is a self-decodable narrowband preamble.

Advantageously, the AP is further configured to exchange narrowband control information and data with the first one or more devices during the SP.

According to an aspect, a method is provided, comprising:
configuring, by one or more processors of an access point (AP), the AP to communicate with one or more stations using a wideband preamble on one or more wideband channels and to communicate with a first one or more devices using one or more narrowband channels;
establishing, by the one or more processors, a service period (SP) with the one or more stations for which the one or more stations and the AP pause communications over the one or more wideband channels;
receiving, by the one or more processors during the SP, one or more protocol data units from the first one or more devices over the one or more narrowband channels without the wideband preamble; and
forwarding, by the one or more processors during the SP, data from the one or more protocol data units to a second one or more devices over the one or more narrowband channels.

Advantageously, the method comprises:
configuring, by the one or more processors, the AP to establish the SP by communicating a target wakeup time (TWT) parameter corresponding to the SP to each of the one or more stations.

Advantageously, the method comprises:
transmitting, by the one or more processors, a clear to send to self (CTS2SELF) frame to at least a station of the one or more stations prior to a start of the SP, the CTS2SELF frame configured to cause the at least the station to refrain from sending transmissions during the SP.

Advantageously, the method comprises:
transmitting, by the one or more processors, over the one or more narrowband channels, a trigger frame to at least one of the first one or more devices or the second one or more devices prior to a start of the SP, the trigger frame configured to indicate to the at least one of the first one or more devices or the second one or more devices to prepare for at least one of a transmission or a receipt of the one or more protocol data units.

Advantageously, the AP and the one or more stations communicate via the one or more wideband channels before and after the SP.

Advantageously, the first one or more devices include an internet of things (IoT) device.

Advantageously, the one or more narrowband channels comprise a bandwidth of up to 1MHz.

Advantageously, the one or more protocol data units comprise a narrowband preamble, wherein the narrowband preamble is a self-decodable narrowband preamble.

Advantageously, the AP is further configured to exchange narrowband control information and data with the first one or more devices during the SP.

According to an aspect, a non-transitory computer-readable medium is provided storing instructions that, when executed by at least one processor, cause the at least one processor to:
establish, for an access point (AP) configured to communicate with one or more stations using a wideband preamble on one or more wideband channels and to communicate with a first one or more devices using one or more narrowband channels, a service period (SP) with the one or more stations for which the one or more stations and the AP pause communications over the one or more wideband channels;
receive, during the SP, one or more protocol data units from the first one or more devices over the one or more narrowband channels without the wideband preamble; and
forward, during the SP, data from the one or more protocol data units to a second one or more devices over the one or more narrowband channels.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 illustrates an example system of extending wireless communication range of a device.
FIG. 3 is an example flow diagram of a method for facilitating wireless communication of narrowband communication devices within a communication range of wideband legacy devices (e.g., Wi-Fi access points).

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} draft version D3.0 standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of range extension in wireless devices.

### A. Computing and Network Environment

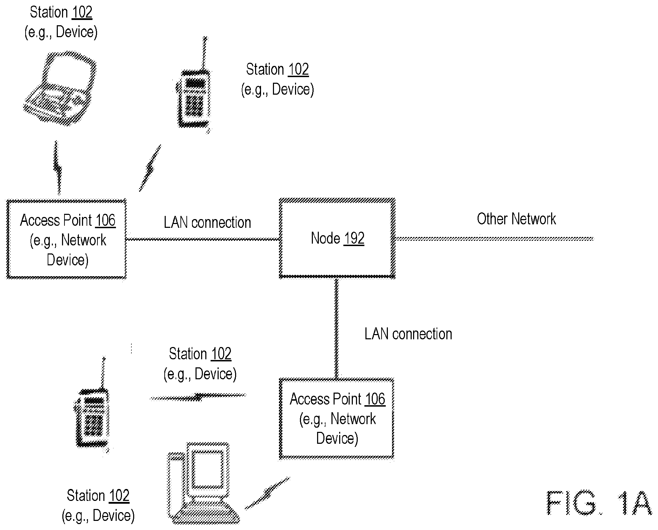

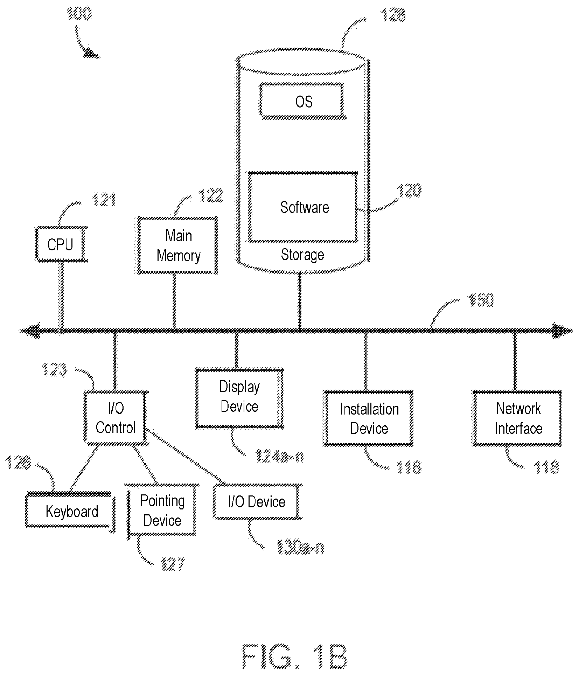

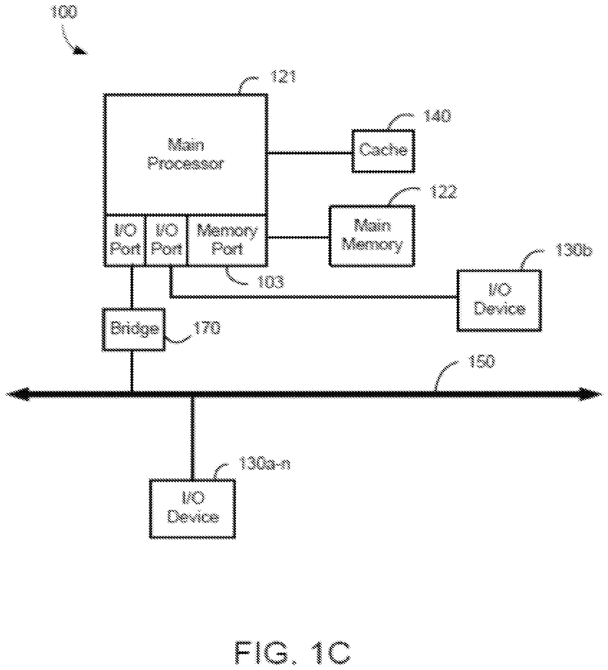

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment, in various embodiments, can be or include an ad hoc network environment, an infrastructure wireless network environment, a subnet environment or a managed network infrastructure combining different technologies, such as various wideband wireless local area network (WLAN) devices (e.g., Wireless Fidelity or Wi-Fi) or low power wide area network (LPWAN) narrowband devices (e.g., internet of things or IoT devices).

Access Points (APs) 106, also referred to as network devices 106, can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using Wireless-Fidelity (Wi-Fi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for, or together with in-home, in-vehicle, or in-building wireless networks (e.g., IEEE 802.11, Bluetooth, ZigBee), or any other type of radio frequency based network protocol and/or variations thereof. Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The wireless communications device(s) 102 and access point(s) or network devices 106 can be deployed as and/or executed on any type and form of computing device, such as a computer, network device, smartphone or appliance capable of communicating on any type and form of network and performing the operations described herein. FIGS. 1B and 1C depict block diagrams of a computing device 100 useful for practicing an embodiment of the station 102 (e.g., a wireless communication devices) or an AP 106 (e.g., a network device). As shown in FIGS. 1B and 1C, each computing device 100 includes a processor 121 (e.g., central processing unit or CPU), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to, and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Range Extension in Wireless Devices

Technical solutions of this disclosure can include systems and methods that facilitate wireless communication of low-power narrowband IoT devices within a communication range of wideband devices, such as Wi-Fi access points and stations. Technical solutions can facilitate narrowband IoT wireless communication at an improved range and reduced interference utilizing coordination mechanisms with Wi-Fi access points. These technical solutions can extend the range for narrowband, low-transmission-power IoT wireless communication devices while reducing communication collisions, thereby enhancing compatibility between the IoT narrowband and legacy wideband AP 106 devices and their corresponding stations 102. The technical solutions can leverage features of the IEEE 802.11 wireless standard, such as rTWT SPs to schedule communication intervals (e.g., quiet periods) for listening to transmissions, clear-to-send-to-self (CTS2SELF) features to reduce collisions, and trigger frames to initiate specific actions between devices. The solutions can also facilitate the use of edge bandwidths outside standard 802.11 channels to facilitate reliable narrowband IoT communications. Range extension can be achieved using mesh/repeater or client relay techniques, where devices (e.g., client stations 102 or APs 106) can facilitate forwarding messages between different range-limited devices. The solutions can incorporate various features of the IEEE P802.11be^{™}/D3.1 standard.

An aspect of the technical solutions can include systems and methods facilitating improving the range of the wireless signals or communications using the IEEE 802.11 (e.g., Wi-Fi) technology. The technical solutions can extend the range for narrowband wireless communication devices operating at low transmission power levels, such as IoT or other types of devices. The technical solutions can utilize AP 106 to pause or stop wideband communications of stations 102 for a period of time (e.g., service period) to facilitate uninterrupted narrowband transmissions within that period. For instance, the solutions can extend the communication range by providing or facilitating transmission or forwarding of narrowband transmissions that are sub-preamble bandwidth range, or by utilizing meshes (e.g., mesh topology) and repeaters to extend the range.

Wideband transmissions can include any data transmissions over a broad frequency range, such as that used by Wi-Fi access points 106 and their corresponding stations 102. Wideband transmissions of APs 106 or stations 102 can facilitate higher data transfer rates than narrowband transmissions. For instance, depending on the technology and implementation, devices that communicate wirelessly using a bandwidth greater than 5 MHz, such as 20 MHz, can be referred to as wideband devices. Similarly, depending on the technology and implementation, narrowband transmissions can include any data transmissions occurring within a bandwidth that is below 5 MHz, such as 1 MHz or less, being characterized by lower data transfer rates used by low power devices. Due to lower data rates and higher power spectral density, narrowband communications can be used in applications in which a more extended range and power efficiency are preferred, as in IoT devices operating in sub-1 MHz frequency bands. The specific frequency ranges for wideband and narrowband transmissions can vary based on implementations within the wireless communication system.

Some wireless technologies can provide a greater range than 802.11 technology for specific use cases. This range limitation in 802.11 technology can be caused by its 20MHz preamble. For example, in a Wi-Fi communication, an initial part of a data frame or packet can be transmitted with a bandwidth of 20MHz to establish a connection between devices and synchronize the devices prior to the actual data transmission, which can limit the effective wireless communication range.

To overcome these challenges, the technical solution can take advantage of narrowband operations to increase signal and transmission range. For example, a 1 MHz transmission can achieve a 13dB higher range compared to a 20 MHz transmission. Accordingly, sub-1MHz narrowband transmissions can provide a higher Power Spectral Density (PSD) with respect to PSDs of wideband transmissions. This can help reduce power consumption while also extending the range, making IoT devices more cost-effective and efficient. IoT devices can exchange data infrequently at low rates, making narrowband transmissions suitable for their use cases.

Integrating support for narrowband transmissions can be challenging, particularly in providing for detection for narrowband transmissions by legacy devices. The technical solutions can overcome such challenges, using for example rTWT SPs to form quiet periods during which IoT devices can exchange communications without the collisions or interferences from the legacy wideband devices, such as the APs 106 or stations 106 within the communication range. The technical solutions can further utilize CTS2SELF and Trigger frames which can be transmitted prior to commencement of the quiet periods to prevent other legacy devices from transmitting during these periods, facilitating and improve the efficiency and speed of the wireless communications.

The technical solutions can provide a 20MHz preamble to be added to narrowband Downlink (DL) or Uplink (UL) transmissions corresponding to IoT devices, enabling concurrent transmission with other devices using a legacy wideband preamble. The technical solution can also utilize the edge bandwidths outside of current 802.11 channels for narrowband exchanges, making use of available bandwidth not suitable for legacy 802.11 transmissions.

The present solution can provide a range extension through mesh/repeater or client relay techniques, which can be beneficial for IoT devices and emergency situations. For example, mesh/repeater devices can forward messages between the access point and range-limited devices, either in the DL or UL, based on the nature of range limitations. Client relay can involve clients connected to the same access point, extending the range for out-of-coverage devices. These relay techniques can leverage Machine Learning (ML) capabilities for efficient communication and can align with IEEE P802.11be^{™}/D3.1 standards.

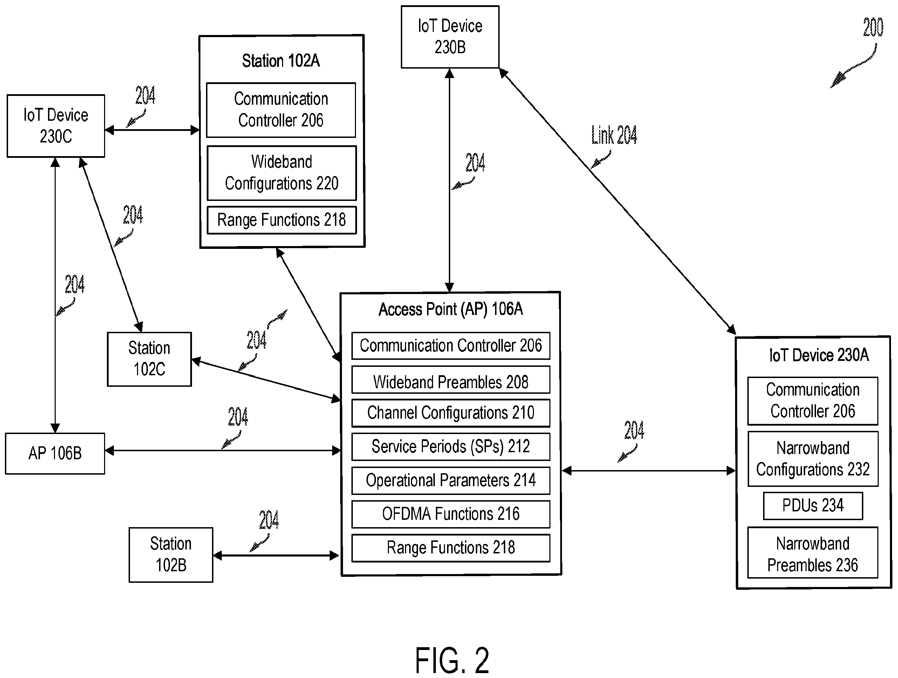

Referring now to FIG. 2, an example of a system 200 for facilitating low-power narrowband wireless communication within the coverage of wideband APs 106 or station 102 devices. For instance, system 200 can extending the range of the IoT low-power narrowband wireless communication via AP 106 devices, such as IEEE 802.11 Wi-Fi devices. Example system 200 can include one or more access points (APs) 106 communicating with one or more stations 102 via one or more links 204. APs 106 and stations 102 can also communicate with, or facilitate communication between, one or more IoT devices 230, via one or more links 204. For instance, AP 106A can communicate, via links 204, with IoT device 230A, IoT device 230B, station 102A, station 102B, AP 106B and station 102C. AP 106A can communicate with IoT device 230C via the station 102C and the links 204 corresponding to 102C, via AP 106B and the links 204 corresponding to AP 106B, or station 102A and the links 204 corresponding to station 102A. IoT devices 230, such as IoT device 230A and 230B can communicate with each other directly via their own dedicated link 204.

AP 106, such as AP 106A-106B, can include one or more communication controllers 206, wideband preambles 208, channel configurations 210, service periods (SPs) 212, operational parameters 214, orthogonal frequency division multiple access (OFDMA) functions 216 and range functions 218. Stations 102, such as stations 102A-102C, can include one or more communication controllers 206, wideband configurations 220 and range functions 218. Internet of Things (IoT) devices 230, such as 230A-230C, can include communication controllers 206, narrowband configurations 232, protocol data units (PDUs) 234 and narrowband preambles 236.

System 200 can include APs 106 that use communication controllers 206 and channel configurations 210 to facilitate wideband wireless communications with stations 102 according to wideband preambles 208. AP 106 can utilize operational parameters 214 (e.g., rTWT SPs, trigger frames or CTS2SELF transmissions) to establish SPs 212 during which narrowband IoT devices 230 can send or receive PDUs 234 via narrowband communications, implemented by communication controllers 206 of the IoT devices 230, via narrowband communications using narrowband configurations 232 and narrowband preambles 236. APs 106 can utilize OFDMA functions 216 to facilitate multiple narrowband communications via a single (e.g., wideband) range. APs 106 and stations 102A can utilize range functions 218 (e.g., mesh, repeater or relay functionalities) to forward the narrowband IoT communications, thereby extending the range of the IoT devices 230.

While system 200 illustrates IoT devices 230 as examples of narrowband communication devices, it is understood that other narrowband wireless communication devices can be included and used instead, such as, for example: two-way radio devices (e.g., walkie talkies and handheld radios), radio frequency identification (RFID) devices, medical implantable devices (e.g., pacemakers or medical sensors, including implantable medical sensors), remote control system devices (e.g., consumer electronics, toys and industrial equipment), telemetry systems (e.g., environmental monitoring sensors), utility metering devices (e.g., smart meters for measuring consumption of electricity, gas or water) or any other devices utilizing narrowband wireless communication.

While system 200 illustrates APs 106 and stations 102 as examples of wideband communication devices, it is understood that other wideband wireless communication devices can be included and used instead, such as, for example: smartphone and mobile devices (e.g., utilizing 4G LTE or 5G communication technologies), laptops and computers (e.g., utilizing Wi-Fi adapters for wideband communication), smart TVs (e.g., with built-in Wi-Fi or Ethernet connections for wideband communications, such as content streaming), game consoles (e.g., featuring Wi-Fi connectivity), wireless printers or cameras, or some wireless audio devices (e.g., wireless speakers or headphones).

Communication controller 206 can include any combination of hardware and software on AP 106 for controlling wireless communication. Communication controller 206 can include functionalities (e.g., any combination of computer code, instructions or circuitry) for controlling wideband communication between stations 102 or narrowband communication between IoT devices 230, as well as any communication involving AP 106. Communication controller 206 can plays facilitate implementation of various solutions for facilitating both narrowband and wideband communications within the AP 106 wireless range, as well as any functionality to optimize and protect narrowband IoT transmissions. For example, communication controller 206 can use IEEE 802.11 wireless parameters or features, such as restricted target wake time service periods (rTWT SPs), to schedule specific communication intervals for efficient resource use. Communication controller 206 can use clear-to-send-to-self (CTS2SELF) features to minimize collisions during transmissions, enhancing the reliability of narrowband communication. Communication controller 206 can implement trigger frames to initiate specific actions between devices and coordinate communication intervals effectively. By leveraging these parameters or features, the communication controller 206 can facilitate an organized and interference-resistant communication environment for both stations 102 connected through the AP 106 and IoT devices 230.

Wideband preamble 208 can include any sequence of code, instructions or bits at a start of a communication to facilitate reliable and coordinated communication of wideband wireless communication devices (e.g., APs 106 and stations 102). Wideband preamble 208 can include a standardized sequence of bits used at a beginning of one or more communication frames by an AP 106 or its communication controller 206. Wideband preamble 208 can include code for facilitating synchronization and timing for effective transmission or frame exchange (e.g., transmission or reception). In the context of legacy communications, such as Wi-Fi communications of stations 102, the wideband preamble 208 can facilitate that the AP 106 and associated stations 102 are in sync, allowing for effective data exchange within the network (e.g., WLAN). In some implementations, wideband preamble 208 can be used to facilitate communication of IoT devices 230, such as when AP 106 or its communication controller 206 transmits the wideband preamble 208 to provide a synchronization mechanism (e.g., to synchronize) for both wideband and narrowband transmissions, so as to stop the stations 102 from transmitting during a SP 212 and allow or signal the IoT devices 230 to exchange narrowband communications during the same SP 212. Wideband preamble 208 can therefore facilitate the IoT devices 230, operating at lower power and narrower bandwidths, to effectively coordinate their communication within the network, contributing to reliable and interference-resistant connectivity.

Channel configuration 210 can include any arrangement, setup or configuration of different types of channels within a wireless network. Channel configurations 210 can include settings, arrangement, setup or configurations for any wideband communication or narrowband channels, including channels including standard 802.11 channels. Channel configurations 210 can include configurations for edge bandwidths not utilized for wideband communications of Wi-Fi devices. AP 106 or its communication controller 206 can utilize one or more channel configuration strategies to facilitate wideband and narrowband communication. For standard 802.11 (e.g., wideband) channels, communication controller 206 can setup the channel configurations 210 to organize communication intervals, including SPs 212 (e.g., quiet periods) so as to manage wideband and narrowband transmissions. Channel configurations 210 can include edge bandwidths outside the standard 802.11 channels to be utilized to facilitate narrowband IoT communications, offering a frequency range for low-power devices that is not to be used by stations 102. This channel configuration facilitates that both wideband legacy activities and narrowband IoT communications coexist harmoniously, optimizing the overall performance and reliability of the wireless network.

Service periods (SPs) 212 can include any time interval during which communication activities are scheduled within a wireless network. SPs 212 can include quiet periods during which wideband communications between stations 102 are stopped to facilitate narrowband communications between IoT devices 230 to be completed. For instance, SPs 212 created or facilitated using target wake time parameters (e.g., rTWT SPs) can include or provide a designated time interval or period during which APs 106 can coordinate communication intervals, including quiet periods, for effective wideband communications (e.g., stopping IoT narrowband transmissions during that time period) or for narrowband transmissions (e.g., stopping wideband station 102 transmissions during that time period). SPs 212 can be used to establish organized windows for device activities and can facilitate efficient resource utilization and minimize potential communication collisions. SPs 212 can include time intervals of any duration, such as 100, 200, 500, 1000, or more than 1000 us. SPs 212 can be scheduled to occur periodically, such as every second, half a second, 0.1 of a second or less than 0.1 of a second. SPs 212 can be scheduled to occur responsive to events, such as transmissions of one or more operational parameters 214 (e.g., rTWTs or trigger frames).

Operational parameters 214 can include any series of data, bits, instructions, settings or commands for establishing SPs 212 and facilitating IoT narrowband communication without collisions with wideband transmissions between one or more of APs 106 and stations 102. Operational parameters 214 can include settings and configurations that the AP 106 can use to establish SPs 212 for stopping wideband communications and triggering or facilitating IoT narrowband communications. Operational parameters 214 can include mechanisms like Target Wake Time (TWT), Clear-to-Send-to-Self (CTS2SELF), and Trigger frames, or any other features or parameters of standard 801.11. For instance, operational parameter 214 can include TWTs used to schedule an SP 212, defining specific time intervals for IoT device communication. For example, operational parameter 214 can include a CTS2SELF to facilitate collision reduction by allowing devices to reserve time for their own transmissions. For example, operational parameter 214 can include a trigger frame used by the AP 106 to initiate specific actions between devices, facilitating coordinated communication intervals.

OFDMA functions 216 can include any combination of hardware and software for facilitating orthogonal frequency division multiple access functionality by AP 106. OFDMA function 216 can include and implement the allocation of different subcarriers to multiple users or devices simultaneously. For example, OFDMA function 216 can allocate and configure one or more sub-channels within a particular channel or frequency range. OFDMA function 216 can configure a plurality of narrowband channels for a plurality of IoT devices 230 within an edge channel that may include a frequency range within Wi-Fi frequency range of operation, but not utilized by AP 106. For instance, OFDMA function 216 can utilize channel configurations 210 to configure, within a wideband or an edge channel of AP 106, one or more narrowband channels using one or more narrowband configurations 232 for IoT devices 230 to communicate their narrowband communications. OFDMA functionalities can facilitate enhanced spectral efficiency and capacity by allowing the AP 106 to allocate resources dynamically, adapting to the diverse communication settings of various devices. This can allow the AP 106 to optimize the use of available frequency bands, facilitating efficient and coordinated communication between multiple narrowband IoT devices and wideband legacy devices, within the network.

Range functions 218 can include any combination of hardware and software for extending range of IoT devices 230, such as by forwarding IoT narrowband transmissions between IoT devices 230 out of the range of each other. Range functions 218 can be deployed on APs 106 and stations 102 and can extend the coverage area for IoT devices 230. Range functions 218 can implement or facilitate mesh or repeater techniques in which devices (e.g., APs 106 or stations 102) facilitate forwarding of the messages between range-limited devices, for both uplink and downlink transmissions. Range functions 218 can implement or facilitate a client relay functionality in which stations 102 connected to the same AP 106 can aid or facilitate in extending coverage to out-of-range devices (e.g., other IoT devices 230 or stations 102). Range functions 218 can configure a mesh network or mesh topology in which each node or device of the network can communicate directly with other nodes to form a decentralized and interconnected network structure. Range functions 218 can configure a repeater device to receive and retransmit a signal, thereby extending the range of the signal transmission. Range functions 218 can utilize the IEEE P802.11be^{™}/D3.1 standard functions to facilitate extension of signal coverage of either IoT devices 230 or stations 102 using APs 106 or stations 102. In an example, range functions 218 can be deployed on a IoT device 230 to use the IoT device to extend the range, as a client repeater or a node on a mesh network.

Wideband configuration 220 can include any configuration or setting for wideband communications of stations 102 via APs 106. Wideband configurations 220 can include configurations for wideband transmissions, such as for 20 MHz, 40 MHz, 80 MHz or 160MHz channel widths to be used with 2.4 GHz band, 5 GHz band or any other bands of Wi-Fi devices. Stations 102 operating in wideband configurations can operate in standard 802.11 channels and in activities such as wideband access and legacy Wi-Fi communications. Wideband configurations 220 can configure wideband transmissions for data exchanges between stations and the AP, characterized by the utilization of wider frequency ranges (e.g., 20 MHz or greater) to accommodate higher data rates.

Narrowband configuration 232 can include any configuration or setting for narrowband communications of IoT devices 230. Narrowband configurations 232 can include settings or configurations for narrowband transmissions, such as transmissions of having channel width under 5 MHz, 2 MHz, 1 MHz, 800 kHz, 500 kHz, 100 kHz or below 100 kHz. For example, IoT devices 230 can communicate at sub-1 MHz narrowband transmissions, allowing for increased range and power efficiency. Narrowband configurations 232 can depend based on IoT device and can be used for specific communication protocols within restricted target wake time service periods (rTWT SPs) defined by the AP 106 facilitating coordinated narrowband exchanges. IoT devices 230 can transmit and receive narrowband control and data within the predefined intervals, utilizing a self-decodable narrowband preamble to facilitate detection by legacy devices. Narrowband configurations 232 can facilitate more efficient resource utilization and improved coexistence of narrowband IoT communications with wider-bandwidth legacy devices within the wireless network.

Protocol data units (PDUs) 234 can include a unit of information that can be specified in a communication protocol and exchanged between network entities for the purpose of transmitting data within a network. PDU 234 can include a physical protocol data unit (PPDU). PDUs 234 can include data bits corresponding to information (e.g., control data or payload) that can be transmitted or received by IoT devices. PDUs 234 can represent the standardized frames facilitating wireless communication. PDUs 234 can include or correspond to physical layer convergence protocol (PLCP) PDU structure, which can encapsulate data or information for transmission. PDUs 234 can include a preamble, which can be used for synchronization, a header containing control and addressing details, and a payload carrying the actual data. In the case of narrowband IoT transmissions, the PDUs are configured with a self-decodable narrowband preamble, facilitating compatibility and detection by legacy devices. The utilization of PDUs within the wireless network allows for organized and structured communication between IoT devices and other network entities.

Narrowband preambles 236 can include any bits of data for synchronizing narrowband communication (e.g., communication between IoT devices 230). Narrowband preambles 236 can serve as self-decodable sequences of bits designed for synchronization and initiation of transmissions within the wireless network. Narrowband preambles 236 can be tailored for sub-1 MHz narrowband transmissions, providing a distinct signaling mechanism that allows IoT devices to efficiently communicate within restricted target wake time service periods (rTWT SPs). For instance, unlike wideband preambles 208 used in legacy devices, the narrowband preambles 236 can be configured to be independently decodable by IoT devices 230 operating at lower power and narrower bandwidths.

Links 204 between IoT devices 230, APs 106 and stations 102 can include any wireless connections or sessions. Links 204 can vary based on the nature of the communication, whether narrowband or wideband. In wideband communications, where higher data rates are typically involved, links 204 can facilitate the exchange of data across broader frequency ranges. For instance, wideband links 204 can support the transmission of larger amounts of data at faster rates than narrowband links 204, thereby potentially improving the overall network capacity. In narrowband communications, links 204 can be tailored to operate within narrower frequency bands, optimizing for extended range and power efficiency. IoT devices 230 can establish links 204 with APs 106 and stations 102 (e.g., and vice versa) during specific intervals, often defined by protocols like rTWT that can be used to establish SPs 212. Links 204 can be orchestrated to facilitate organized and interference-resistant communication within the wireless network, adjusted or configured for preferences of narrowband IoT devices.'

The technical solutions can facilitate enhanced narrowband downlink (DL) and uplink (UL) transmissions by implementing specific mechanisms such as rTWT SPs for quiet periods. For instance, an access point (AP) can establish rTWT SPs and corresponding short, sparse quiet periods. Each SP 212 (e.g., quiet period) can last approximately 100 microseconds (e.g., every 0.1, 0.5 or 1 second), during which IoT devices 230 can exchange narrowband control and data without interference from wideband signals. Additionally, the technical solutions can use new self-decodable narrowband preambles for IoT transmissions. Furthermore, the technical solutions can offer or facilitate protection for narrowband DL/UL transmissions through the use of CTS2SELF and Trigger frames, where the AP 106 can define specific periods (e.g., SPs 212) for IoT devices to exchange narrowband data, facilitating that other devices do not transmit during those intervals. This approach, for example, may not include IoT devices transmitting a wideband CTS, streamlining the communication process and enhancing efficiency.

In one example, a device can include a PHY layer design where an 802.11 PHY with a narrower bandwidth can be designed having its own narrowband preamble or involve repetition in time while keeping the bandwidth not less than 20MHz so that the same transmission takes a longer time. Redesigning the PHY layer can include standardization and productization effort. Repetition in time can be wasteful if the transmission utilizes resources and could have been transmitted in a narrowband manner multiplexed with other narrowband transmissions. The technical solutions can address the issues involving IEEE 802.11 technology lacking in range compared to some other wireless technologies. The present technical solution can increase the effective signal range for devices, such as for example the IoT devices 230 that are constrained on transmit power, although the solution can be used for any other wireless technologies. In an example, the proposed solution can be implemented by downclocking the 802.11PHY and as a mode of operation in UHR, thereby increasing the range for devices, such as IoT devices, which are constrained on transmit power.

The present solution can provide a range extension through a narrowband operation. Narrowband transmissions can increase the signal or transmission range. For example, a 1 MHz transmission can nominally have a 13dB higher range than a 20 MHz transmission. Additionally, sub-1MHz narrowband transmissions can provide a power spectral density (PSD) improvement or advantage as regulations can specify PSD per 1MHz of bandwidth. For instance, a sub-1MHz transmission can transmit at the same power as 1MHz, thus achieving higher PSD. Narrowband transmission/reception can make IoT devices 230 cheaper and use less power. Bandwidth capability for transmission/reception can be a determinant of a device's power consumption. IoT devices 230 can be expected to exchange data infrequently and rates lower than wideband devices, so the low data rates of narrowband transmissions may not pose a problem for the typical IoT use cases. However, a challenge in adding support for narrowband transmissions and receptions can be to facilitate their detection by legacy devices which should defer to the IoT devices 230 during narrowband transmissions.

For example, the present technical solutions can provide protection of narrowband downlink (DL)/uplink (UL) transmissions through rTWT SPs 212 during which specific actions or scheduled operations can be performed (e.g., listening to incoming transmissions). For instance, AP 106 can define rTWT SPs 212 that can be very short, such as on the order of approximately 100 microseconds and sparse (e.g., once every second). Within a SP 212, the AP 106 and IoT devices 230 can exchange narrowband control and data. The IoT devices 230 can be outside the range of the wideband preamble 208 and can omit to decode it or transmit it. In such instances, the PDUs 234 (e.g., PPDUs) that are received and transmitted by the IoT devices 230 can be narrowband and without any wideband preamble 208. A new self-decodable narrow band preamble 236 can be defined, transmitted and used for such IoT narrowband transmissions, according to narrowband configurations 232 and across any range of narrowband channels configured by channel configurations 210 for IoT devices 230 or AP 106.

For example, the present technical solution can provide protection of narrowband DL/UL transmissions through CTS2SELF and Trigger frames. The AP 106 can define periods (e.g., SPs 212) in which the AP 106 and IoT devices 230 can exchange narrowband control and data. Just ahead of these periods, (e.g., prior to commencement of SP 212) the AP 106 can transmit CTS2SELF and/or Trigger frames so that other devices (e.g., stations 102 communicating via AP 106) do not transmit during the period. The request to send (RTS) or clear to send (CTS) may not be used to quieten other devices and followed by narrowband transmission/reception in a transmission opportunity (TXOP), as the solution can rely on the IoT devices 230 to transmit a wideband CTS.

For example, the present technical solution can provide a 20MHz wideband preamble 206 that can be prefixed to the narrowband DL or UL transmission of an IoT device 230. Within an rTWT SP 212 or even outside of the SP 212, the AP 106 can transmit DL or schedule UL transmission from the IoT devices 230 in a narrowband orthogonal frequency division multiple access (OFDMA) manner using OFDMA functions 216. In doing so, the technical solutions can utilize OFDMA to concurrently transmit or schedule transmission from other devices (e.g., creating multiple narrowband sub-channels within a wideband or edge channel) where the devices still depend on a legacy wideband preamble. The IoT devices 230 can have or use an independently decodable narrowband preamble 236. The wideband preamble 208 can get transmitted by the AP 106 on the DL or by the legacy OFDMA participants on the UL, leading to improved utilization of resources.

For example, the present technical solution can use edge bandwidths outside of current 802.11 channels for narrowband exchanges. In an implementation, there can be a bandwidth (e.g., band or channel) available at the edge of various bands which are not usable for legacy 802.11 either because such edge channels or bands can be less than or narrower than 20 MHz, or because legacy 802.11 transmissions with bandwidth of 20MHz+ may not the out-of-band emission norms. The bandwidth of such channels can be used for narrowband exchanges with IoT devices 230.

The present technical solution can provide a range extension through mesh/repeater or client relay. For example, the present technical solution can utilize range functions 218 at stations 102 or APs 106 to extend range, including for IoT devices 230. For instance, the technical solutions can use client relay and mesh/repeater configurations or implementations to extend ranges between two IoT devices 230. A mesh or repeater configuration can be formed to facilitate extending the coverage by forwarding messages from the AP 106 to the range limited IoT device 230 or/and vice versa. The forwarding can be in both the DL and the UL or only in the UL, depending on the nature of range limitation. The forwarding can be implemented using one or more APs 106 (e.g., forward the narrowband transmission between two IoT devices 230 via one or more APs 106), using one or more stations 102 (e.g., forward the narrowband transmission between two IoT devices 230 via one or more stations 102), or using any combination of one or more APs 106 and stations 102.

Due to typically lower transmit power for IoT devices 230 with respect to the transmit power of the APs 106 or stations 102, in some implementations the range extension can be implemented only on the UL. A distributed multi link operation (MLO) architecture can be included in the system to help accomplish such range extension. An MLO can include a feature of a Wi-Fi (e.g., AP 106 device) that facilitates devices (e.g., stations 102) to simultaneously send and receive data across different frequency bands and channels. For instance, MLO can include the functionality to provide and support multiple links between a station 102 and AP 106, increasing the throughput, reducing the latency and improving reliability. MLO functionality can aggregate multiple frequency channels using different frequency bands simultaneously, in applications, such as virtual reality or augmented reality applications, online gaming, remote office, and cloud computing. In some implementations, MLO functionality and range extension can be combined with narrowband solutions or features discussed herein such that a configured repeater (e.g., station 102 or AP 106) communicates using narrowband operation with the IoT device 230 and using wideband operation with the root AP 106.

In some implementations, a client relay solution can be implemented, using stations 102 connected to the same AP 106 to provide an extended range for the IoT devices 230 to IoT devices 230 that are out of each other's range. For instance, machine learning (ML) capabilities can be used for stations 102 to implement this solution, such that the ML model can be trained to use one link 204 to communicate with the AP 106 and another link 204 to communicate with the IoT device 230. For instance, a neural network model can be trained on a plurality of configurations and network nodes of stations and access points to determine the path through which a range can be extended (e.g., an IoT device narrowband signal is to be forwarded to extend the signal's range between IoT devices 230). Based on the ML model determining the path (e.g., the devices to be used for range extension), CTS2SELF and trigger frames can be used for transmission opportunity (TXOP) sharing. For instance, TXOP sharing feature can be triggered using standard 802.11be.

There can be various incentives for a station 102 which provides such a relay service, such as a possibility of extended coverage using the services of another station 102 if this client is out of coverage at any other location. Another incentive can be increased rate of allocations, such as while transmitting and eliciting data corresponding to the out-of-coverage device, DL/UL data corresponding to this relay client can also be transmitted, using for example, features of the IEEE P802.11be^{™}/D3.1.

In some aspects, the system 200 can be directed to facilitating narrowband communication of devices 230 within the communication range of wideband legacy devices (e.g., APs 106 and stations 102). The system 200 can facilitate low-power narrowband wireless communication (e.g., transmissions of IoT or other narrowband devices) within the communication range of wideband Wi-Fi devices (e.g., APs 106, stations 102, or other wideband devices). System 200 can facilitate improved wireless communication range of the narrowband devices (e.g., IoT devices 230 or other narrowband devices) and reducing communication interference with the wideband devices. System 200 can include coordination mechanisms to time the narrowband and wideband communications so as to avoid transmission collisions between the two, improving their interoperation and compatibility. For instance, system 200 can utilize IEEE 802.11 wireless operational parameters or features, such as rTWT SPs, CTS2SELF transmissions and trigger frames for scheduling communication intervals and reducing collisions between wideband and narrowband devices. System 200 can provide signal range extension for narrowband devices (e.g., IoT devices 230) using mesh network, repeater configurations or client relay techniques, utilizing wideband devices to forward narrowband transmissions, extending the range of the narrowband devices.

System 200 can include any combination of one or more APs 106, stations 102 and IoT devices 230. System 200 can be configured to implement the configurations and functionalities of the AP 106, stations 102 and narrowband devices (e.g., IoT devices 230 or any other narrowband devices) using instructions, computer code, commands and data stored in one or more main memories 122 or storage devices and executed on one or more main processors 121. For example, system 200 can include a non-transitory computer-readable medium (e.g., memory 122) storing instructions that, when executed by at least one processor 121, cause the at least one processor to implement functionalities or actions of the system 200.

For example, system 200 can include an AP 106 configured (e.g., via one or more instructions from memory 122, executed on one or more processors 121) to communicate with one or more stations 102 using a wideband preamble 208 on one or more wideband channels (e.g., configured by channel configurations 210 for wideband channels of the AP). The AP 106 can be configured (e.g., via the one or more instructions executed on one or more processors 121) to communicate with a first one or more of narrowband devices (e.g., IoT devices 230) using one or more narrowband channels (e.g., configured by channel configurations 210 for narrowband channels for IoT devices 230).

The AP 106 can be configured (e.g., via one or more instructions executed on one or more processors 121) to establish an SP 212 with the one or more stations 102. The SP 212 can be used or established so that one or more stations 102 and the AP 106 pause communications (e.g., wideband wireless transmissions) over the one or more wideband channels (e.g., channels of 20 MHz or wider channel widths, such as those used in Wi-Fi communications) during the duration of the SP 212. SP 212 can include any duration, such as a time duration of about 50us, 100us, 150us, 200us, 250us or more than 250us. SP 212 can be established periodically, such as every second, every 0.5, 0.25 or 0.1 seconds.

The AP 106 can be configured (e.g., via one or more instructions executed on one or more processors 121) to receive, during the SP 212, one or more protocol data units 234 from the first one or more narrowband devices (e.g., IoT devices 230 or other narrowband devices) over the one or more narrowband channels. The one or more PDUs 234 can be received without the wideband preamble 208 that can be used between AP 106 and stations 102 for wideband communication, such as Wi-Fi communication over a Wi-Fi 20 MHz, 40 MHz, 80 MHz or 160 MHz channel width.

The AP 106 can be configured (e.g., via one or more instructions executed on one or more processors 121) to forward, during the SP 212, data from the one or more protocol data units 234 to a second one or more narrowband devices (e.g., IoT devices 230 or other narrowband devices) over the one or more narrowband channels. For instance, AP 106 can forward the received PDUs 234 from the first one or more IoT devices 230 to the second one or more devices 230. The first and the second IoT devices 230 can be outside of their communication range, and the AP 106 can be disposed between them, thereby forwarding their communication, during the SP 212, effectively extending their wireless communication range (e.g., via the AP 106).

The AP 106 can be configured (e.g., via one or more instructions executed on one or more processors 121) to establish the SP by communicating a target wakeup time (TWT) parameter corresponding to the SP to each of the one or more stations.

The AP 106 can be configured (e.g., via one or more instructions executed on one or more processors 121) to transmit a clear to send to self (CTS2SELF) frame to at least a station of the one or more stations prior to a start of the SP, the CTS2SELF frame configured to cause the at least the station to refrain from sending transmissions during the SP.

The AP 106 can be configured (e.g., via one or more instructions executed on one or more processors 121) to transmit, over the one or more narrowband channels, an operational parameter 214, such as a trigger frame, to at least one of the first one or more IoT devices 230 or the second one or more IoT devices 230 prior to a start of the SP 212. The trigger frame (e.g., 214) can be configured (e.g., include signals or data) to indicate to the at least one of the first one or more IoT devices 230 or the second one or more IoT devices 230 to prepare for at least one of a transmission or a receipt of the one or more protocol data units 234 (e.g., PPDUs transmitted via narrowband wireless communications between the IoT devices 230).

The AP 106 and the one or more stations 102 can communicate via the one or more wideband channels (e.g., configured via wideband channel configurations 210 and using wideband preambles 208) before or after the SP 212. The first one or more devices can include an internet of things (IoT) device. The first one or more devices or the second one or more devices can include any device configured for narrowband transmissions, including for example, a two-way radio, an RFID device, a medical implantable device, a sensor device, a remote control system device, a telemetry device, a utility metering device, a supervisory control and data acquisition (SCADA) system or device or any other system or device configured for narrowband transmissions.

The one or more narrowband channels can comprise a bandwidth or a channel width of up to 1MHz. The one or more channels can comprise a bandwidth or a channel width of up to, 50 kHz, 100 kHz, 200 kHz, 500 kHz, 700 kHz, 900 kHz, 1 MHz, 1.5 MHz, 2 MHz, 3 MHz, 4 MHz or 5 Mhz. The narrowband channels can be configured using channel configurations 210 or narrowband configurations 232. The narrowband channel configurations can be configured for a variety of bandwidths depending on the frequency or power of the application.

The one or more protocol data units can include a narrowband preamble 236. The narrowband preamble 236 can be a self-decodable narrowband preamble. A self-decodable narrowband preamble can include any preamble used in wireless communication systems that enables the receiver to decode the preamble without any prior knowledge of the transmitted signal. This type of preamble can be designed to be simple and easy to decode by a low-power, low-cost device using low-power or short-range wireless communication. The self-decodable preamble 236 can be transmitted at a low data rate and used to synchronize the receiver with the transmitter. Once the receiver has synchronized with the transmitter, the receiver can begin decoding the data transmitted by the transmitter.

For instance, a self-decodable narrowband preamble 236 can include a signaling sequence in wireless communication tailored for narrowband transmissions, such as for low-power devices like IoT devices 230. The narrowband preamble 236 can be structured to facilitate decoding by the receiver, even under challenging conditions or when the signal strength is minimal. For instance, narrowband preamble 236 can include feature patterns or sequences that can be identified by receiving devices, facilitating decoding in low signal-to-noise ratio environments, such as by including a repetitive pattern in the preamble. The receiver can be equipped to independently decode this narrowband preamble 236 and can establish synchronization with the transmitted signal, facilitating communication in narrowband scenarios without additional wideband signaling. The AP 106 can be configured to exchange narrowband control information and data with the first one or more devices (e.g., narrowband devices, such as IoT devices 230) during the SP.

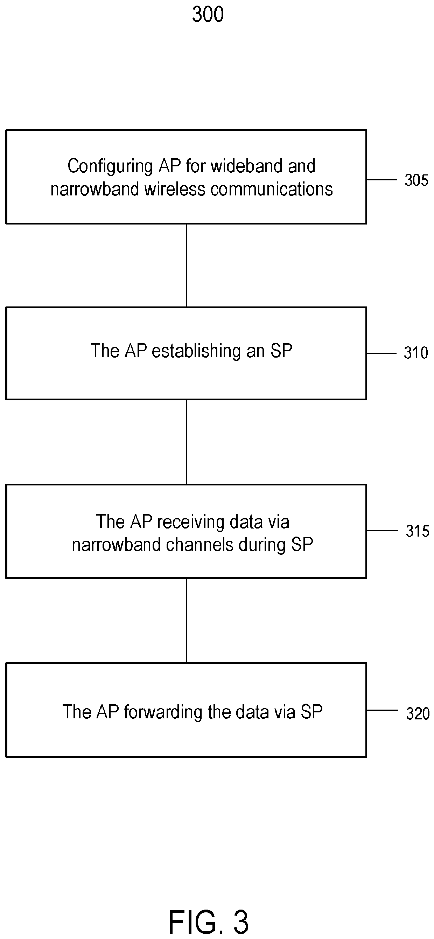

FIG. 3 illustrates an example flow path of a method for facilitating wireless communication of narrowband devices within the communication range of wideband legacy devices (e.g., Wi-Fi access points). The method 300 can include a flow diagram for facilitating low-power narrowband wireless communication (e.g., transmissions of IoT or other narrowband devices) within the communication range of wideband Wi-Fi devices. Method 300 can be implemented by, for example, system 200 illustrated in FIG. 2, along with components or features described in connection with FIGS. 1A-1C. Method 300 can include acts 305-320. At 305, an access point (AP) can be configured for wideband and narrowband wireless communications. At 310, the AP can establish a service period (SP). At 315, the AP can receive data via narrowband channels during SP. At 320, the AP can forward the data via SP.

At 305, the method can include configuring an access point (AP) for wideband and narrowband wireless communications. The method can include one or more processors of the AP configuring the AP to communicate with one or more stations using a wideband preamble on one or more wideband channels. The method can include the one or more processors of the AP configuring the AP to communicate with a first one or more devices using one or more narrowband channels. For example, configuring can include establishing channel configurations for narrowband and wideband communications. Configuring can include establishing range functions for extending or forwarding narrowband signals. Configuring can include establishing OFDMA functions for transmitting multiple narrowband communications via a dedicated wideband or edge channel. Configuring can include establishing wideband and narrowband preambles for coordinating wireless communications. Wideband communications can include communications at channel widths of at least 20 MHz, 40 MHz, 80 MHz or 160 MHz. Narrowband communications can include communications at channel widths of up to 500 kHz, 700 kHz or 1 MHz.

The first one or more devices include one or more narrowband wireless communication devices. The first one or more devices can include an internet of things (IoT) device, a two-way radio, an RFID device, a medical implantable device, remote control system, or a telemetry system or a device. The one or more narrowband channels can include a bandwidth of up to 1MHz. The AP can include a Wi-Fi device (e.g., Wi-Fi router), cellular access point, Bluetooth access point, Zigbee or Z-Wave access point or a mesh network access point. One or more stations can include laptops, smartphones, tablets or computers, gaming consoles, smart televisions, wireless cameras or mobile hotspots.

At 310, the AP can establish a service period (SP). The method can include the one or more processors of AP configuring a service period (SP) with the one or more stations for which the one or more stations and the AP pause communications over the one or more wideband channels. Configuring SP can include the AP sending or broadcasting a message or a transmission to the stations coupled or connected to the AP to establish a quiet period, or a period during which wideband communications by stations are paused or stopped. The SP can include a period or a time duration, such as a duration of up to 50us, 100us, 150us, 200us, 500us or 1ms. The SP can be configured or established to be periodic (e.g., occurring every 0.1s, 0.5s or every second).

The method can include the one or more processors configuring the AP to establish the SP using one or more operational parameters. For example, the method can include the one or more processors configuring the AP to establish the SP by communicating a target wakeup time (TWT) parameter corresponding to the SP to each of the one or more stations. The method can include the AP transmitting a clear to send message, such as a clear to send to self (CTS2SELF) frame to at least a station of the one or more stations prior to a start of the SP. The CTS2SELF frame can be configured to cause the at least the station to refrain from sending transmissions during the SP.

At 315, the AP can receive data via narrowband channels during SP. The method can include the one or more processors of the AP receiving, during the SP, one or more protocol data units from the first one or more devices over the one or more narrowband channels without the wideband preamble. For example, the AP can receive one or more PPDUs from one or more narrowband devices, such as IoT devices, during the SP. The one or more PPDUs can be transmitted by the one or more narrowband devices responsive to the SP. For example, the one or more narrowband devices (e.g., IoT devices) can begin transmissions of one or more PPDUs in response to receiving a message or a transmission indicating a start of the SP.

The method can include the one or more processors of the AP transmitting, over the one or more narrowband channels, a trigger frame to at least one of the first one or more devices or the second one or more devices prior to a start of the SP. The trigger frame can be configured to indicate to the at least one of the first one or more devices or the second one or more devices to prepare for at least one of a transmission or a receipt of the one or more protocol data units.

At 320, the AP can forward the data via SP. The method can include the one or more processors of the AP forwarding, during the SP, data from the one or more protocol data units to a second one or more devices over the one or more narrowband channels. For example, the AP can forward one or more PPDUs received from a first IoT device to a second IoT device. For example, the second IoT device can be outside of the wireless communication range of the first IoT device or vice versa. The AP can be located or deployed between the first and the second IoT devices and can be configured to operate as a repeater or a range extender, forwarding narrowband communications between the first and the second IoT devices.

The AP and the one or more stations can communicate via the one or more wideband channels before and after the SP. For example, the AP and the one or more stations can communicate using wideband preambles and transmitting wideband transmissions. The wideband transmissions can be paused during the SP and can be ongoing before or after the SP. The one or more protocol data units (e.g., PPDUs communicated via narrowband transmissions) can include a narrowband preamble. The narrowband preamble can include a sequence of data (e.g., symbols or signals) transmitted at a beginning of a narrowband transmission to indicate functions in the communication process, such as synchronization of the receiver and the transmitter, frame delimitation (e.g., marking the beginning or end of each data frame), channel characteristics (e.g., channel strength or potential distortions), carrier frequency offset or signal gain control data. The narrowband preamble can include instructions. The narrowband preamble can be a self-decodable narrowband preamble, which the receiving narrowband device can receive and decode independently to prepare for reception of the incoming transmission. For example, a station or an AP can be configured to exchange narrowband control information and data with the first one or more devices during the SP, including any narrowband communication, such as narrowband communication for receiving and forwarding.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of devices or data, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., stations, APs or narrowband or IoT devices) that can operate within a system or environment.

It should be understood that the systems described above can provide multiple ones of any or each of those components and these components can be provided on either a standalone machine or, in some embodiments, on multiple machines in a distributed system. Further still, bit field positions can be changed, and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system comprising:
an access point (AP) configured to communicate with one or more stations using a wideband preamble on one or more wideband channels and to communicate with a first one or more devices using one or more narrowband channels;
wherein the AP is configured to:
establish a service period (SP) with the one or more stations for which the one or more stations and the AP pause communications over the one or more wideband channels;
receive, during the SP, one or more protocol data units from the first one or more devices over the one or more narrowband channels without the wideband preamble; and
forward, during the SP, data from the one or more protocol data units to a second one or more devices over the one or more narrowband channels.

2. The system of claim 1, wherein the AP is further configured to establish the SP by communicating a target wakeup time (TWT) parameter corresponding to the SP to each of the one or more stations.

3. The system of claim 1 or 2, wherein the AP is further configured to:
transmit a clear to send to self (CTS2SELF) frame to at least a station of the one or more stations prior to a start of the SP, the CTS2SELF frame configured to cause the at least the station to refrain from sending transmissions during the SP.

4. The system of any preceding claim, wherein the AP is further configured to:
transmit, over the one or more narrowband channels, a trigger frame to at least one of the first one or more devices or the second one or more devices prior to a start of the SP, the trigger frame configured to indicate to the at least one of the first one or more devices or the second one or more devices to prepare for at least one of a transmission or a receipt of the one or more protocol data units.

5. The system of any preceding claim, wherein the AP and the one or more stations are further configured to communicate via the one or more wideband channels before and after the SP.

6. The system of any preceding claim, wherein the first one or more devices include an internet of things (IoT) device.

7. The system of any preceding claim, wherein the one or more narrowband channels comprise a bandwidth of up to 1MHz.

8. The system of any preceding claim, wherein the one or more protocol data units comprise a narrowband preamble.

9. The system of claim 8, wherein the narrowband preamble is a self-decodable narrowband preamble.

10. The system of any preceding claim, wherein the AP is further configured to exchange narrowband control information and data with the first one or more devices during the SP.

11. A method, comprising:
configuring, by one or more processors of an access point (AP), the AP to communicate with one or more stations using a wideband preamble on one or more wideband channels and to communicate with a first one or more devices using one or more narrowband channels;
establishing, by the one or more processors, a service period (SP) with the one or more stations for which the one or more stations and the AP pause communications over the one or more wideband channels;
receiving, by the one or more processors during the SP, one or more protocol data units from the first one or more devices over the one or more narrowband channels without the wideband preamble; and
forwarding, by the one or more processors during the SP, data from the one or more protocol data units to a second one or more devices over the one or more narrowband channels.

12. The method of claim 11, comprising:
configuring, by the one or more processors, the AP to establish the SP by communicating a target wakeup time (TWT) parameter corresponding to the SP to each of the one or more stations.

13. The method of claim 11 or 12, comprising:
transmitting, by the one or more processors, a clear to send to self (CTS2SELF) frame to at least a station of the one or more stations prior to a start of the SP, the CTS2SELF frame configured to cause the at least the station to refrain from sending transmissions during the SP.

14. The method of any preceding claim 11 to 13, comprising:
transmitting, by the one or more processors, over the one or more narrowband channels, a trigger frame to at least one of the first one or more devices or the second one or more devices prior to a start of the SP, the trigger frame configured to indicate to the at least one of the first one or more devices or the second one or more devices to prepare for at least one of a transmission or a receipt of the one or more protocol data units.

15. A non-transitory computer-readable medium storing instructions that, when executed by at least one processor, cause the at least one processor to:
establish, for an access point (AP) configured to communicate with one or more stations using a wideband preamble on one or more wideband channels and to communicate with a first one or more devices using one or more narrowband channels, a service period (SP) with the one or more stations for which the one or more stations and the AP pause communications over the one or more wideband channels;
receive, during the SP, one or more protocol data units from the first one or more devices over the one or more narrowband channels without the wideband preamble; and
forward, during the SP, data from the one or more protocol data units to a second one or more devices over the one or more narrowband channels.
